# FASCICULE DE BREVET EUROPEEN

(11) **EP 4 154 777 B1**
(45) Date de publication et mention de la délivrance du brevet: **26.06.2024**
(21) Numéro de dépôt: 22195792.1
(22) Date de dépôt: 15.09.2022
(51) Int. Cl.: A47J 43/08, A47J 43/10

(54) **DISPOSITIF D' ENTRAINEMENT A ROTATION UNIDIRECTIONNELLE OU BIDIRECTIONNELLE**
ANTRIEBSVORRICHTUNG MIT UNI- ODER BIDIREKTIONALER DREHUNG
DRIVE DEVICE WITH UNIDIRECTIONAL OR BIDIRECTIONAL ROTATION

(30) Priorité: 23.09.2021 FR 2110039
(43) Date de publication de la demande: 29.03.2023
(73) Titulaire: SEB S.A., 69130 Ecully (FR)
(72) Inventeur: BENOIT, David, 69134 Ecully Cedex (FR); PLICHON, Stéphane, 69134 Ecully Cedex (FR)
(74) Mandataire: SEB Développement

(56) Documents cités:
- DE-A1-102013 112 225
- DE-U1-202018 105 480

## Description

### DOMAINE DE L'INVENTION

La présente invention concerne le domaine des dispositifs d'entrainement manuel à corde pour les appareils culinaires découpeurs, mélangeurs ou broyeurs.

### ETAT DE LA TECHNIQUE

De nombreux appareils culinaires mélangeurs ou hacheurs sont connus de l'état de la technique. On distingue notamment les appareils électriques dans lesquels un dispositif d'entrainement à l'aide d'un moteur électrique entraine en rotation un outil qui peut être un couteau ou un bras mélangeur.

Les dispositifs d'entrainement électriques ont pour principal avantage d'offrir un couple constant et une vitesse de rotation variable qui est directement fonction de la vitesse de rotation du moteur électrique.

Ces dispositifs d'entrainement électriques permettent très avantageusement d'offrir un couple et une vitesse de rotation élevés. Néanmoins, ils imposent d'être raccordés à une prise électrique, ils sont consommateur d'énergie et surtout ils sont sujets aux pannes du moteur électrique. Or le plus souvent il est moins couteux de changer l'intégralité du dispositif d'entrainement, plutôt que de le réparer, ce qui est générateur de déchets. Les appareils culinaires à dispositif d'entrainement électrique présentent donc le double inconvénient d'être consommateur d'énergie et générateur de déchet.

Dans ce contexte, des dispositifs d'entrainement manuel sont étudiés. Ainsi, d'une manière classique, on connaît l'essoreuse à salade dont le panier est entraîné en rotation par un cordon déroulé par l'utilisateur puis enroulé par un ressort de rappel. Sur ce principe, de nombreux dispositifs d'entrainement ont été proposés.

On peut citer par exemple le document US 2009/0178580 qui décrit un ensemble de couteaux entraîné dans un bol pour hacher des aliments via le dispositif d'entraînement manuel. Le dispositif décrit dans ce document présente l'inconvénient que le couple transmis à l'ensemble de couteaux ne peut pas être adapté de manière optimale à l'outil de coupe ou de mélange. Par exemple, lorsque vous coupez des oignons ou des pommes, au début du mouvement, lorsque les aliments sont grossièrement découpés et volumineux, vous devez appliquer un couple plus important qu'à la fin du processus car ces denrées alimentaires présentent une résistance plus importante à la coupe. Plus tard, au cours du processus de coupe, lorsque les aliments sont plus finement découpés et moins volumineux, vous souhaitez obtenir une vitesse et une dynamique plus grandes dans le bol. Pour cela il est nécessaire pour mélanger les morceaux d'augmenter la vitesse de rotation et de réduire le couple. En effet, dans le cas d'une transmission manuelle d'un mouvement, d'une manière connue, le couple et la vitesse de rotation sont deux paramètres antagonistes. Pour augmenter le couple, il faut réduire la vitesse, et vice-versa.

On connaît aussi le document WO 2006/114252 qui décrit une centrifugeuse pour un dispositif de séchage dans laquelle un dispositif d'entraînement manuel de broche est utilisé. Dans cette centrifugeuse, un écrou de broche en contact avec le filetage d'une broche est déplacé le long de son axe longitudinal par rapport à la broche. Le filetage de la broche est constant sur toute la longueur du pas de filetage de la broche. Le mouvement relatif de l'écrou de broche par rapport à la broche provoque la rotation de la broche et d'un arbre portant la broche, qui est couplée à un balai laveur, autour de l'axe longitudinal. Néanmoins ce dispositif d'entraînement présente un couple et une vitesse de rotation constants.

Le document DE 580073 décrit une machine à mélanger et battre, pour les boulangeries, avec un changement de vitesse continuellement variable. Bien que cette machine permette un changement de vitesse, la boîte de vitesses est conçue pour une machine qui doit être commutée manuellement. L'opérateur doit donc régler la vitesse manuellement en actionnant une boite de vitesse.

Le document FR 2 532 540 décrit un appareil pour réaliser et mélanger des sauces. Bien que le dispositif d'entrainement de cet appareil possède un train d'engrenage pour modifier la vitesse de rotation, le rapport d'engrenage est fixe et le couple ne peut varier qu'en faisant varier la force appliquée de l'extérieur. Il en va de même pour l'appareil à hacher manuellement des aliments, décrit dans le document WO 2004/073474, qui comporte également un engrenage dans un couvercle qui entraîne en rotation un outil de coupe sous la forme d'un ensemble de couteaux.

On peut aussi citer le hachoir alimentaire connu du document EP 2015660 B1. En tirant sur une corde, l'utilisateur peut activer les pièces mobiles de l'unité de traction par corde. Un tambour à corde est entraîné directement par la corde. Celui-ci est couplé dans un sens de rotation via un embrayage à roue libre avec un élément de connexion. À son tour, un épaulement de la colonne de couteaux peut être inséré dans l'élément de connexion afin de produire une connexion positive dans le sens de la rotation. En tirant la corde, la colonne de couteaux mise en rotation. Les couteaux attachés frappent l'aliment à découper dans le récipient et le coupe.

De même, avec le hachoir alimentaire connu du document DE102013112225, en tirant sur une corde, l'utilisateur peut activer des pièces mobiles de l'unité d'entraînement à corde. Un tambour à corde est entraîné directement par la corde et est couplé positivement dans l'élément de connexion dans un sens de rotation et découplé dans l'autre sens de rotation de l'élément de connexion. Une transmission au moins à deux étages est formée entre l'unité d'entraînement à corde et l'élément de connexion rotatif, laquelle est commutable entre un mode de coupe à faible vitesse et un mode de coupe précise avec une vitesse plus élevée par rapport au mode de coupe à faible vitesse.

Dans l'autre sens de rotation, la colonne de couteaux est découplée via l'embrayage à roue libre de l'entraînement à corde, de sorte que la corde de traction puisse être dépassée sans encombre. Dans l'unité d'entraînement à corde, un ressort de rappel est conçu pour rétracter la corde tirée par l'utilisateur et ainsi préparer le prochain mouvement de tirage.

Cependant, il a été démontré qu'il est souhaitable de pouvoir accélérer la vitesse de rotation de l'arbre d'entrainement du mélangeur pour un brassage plus efficace. Pour un brassage, une vitesse angulaire élevée de l'arbre d'entrainement du mélangeur est souhaitable, de sorte que le nombre de tours par minutes augmentent, permettant ainsi un brassage plus rapide. Cependant, pour ce faire, l'utilisateur doit tirer sur la corde avec force et très rapidement, compte tenu du rapport de démultiplication du dispositif d'entraînement. Pour le broyage, une force de coupe plus importante est nécessaire, car le matériau à couper est initialement non broyé et peut se révéler dur. Si la préparation alimentaire à mélanger est liquide ou composé de pièces plus petites et tendres, la force requise est réduite et la vitesse peut être augmentée. Il est cependant possible d'utiliser l'arbre d'entrainement du mélangeur à vitesse réduite et couple augmenté si la texture du mélange se révélait être si dense que le retour de la corde serait empêché par manque de force du ressort de rappel. Il est également possible d'utiliser la vitesse de rotation élevée avec l'arbre d'entrainement de découpe si les matériaux sont suffisamment fins pour offrir moins de résistance et permettre aux couteaux de revenir en arrière sans exercer un blocage qui empêcherait la corde de se rétracter.

Dans ce contexte, il est nécessaire de fournir un dispositif d'entrainement pour un appareil culinaire mélangeur ou broyeur qui permette d'alterner simplement entre une rotation unidirectionnelle et une rotation bidirectionnelle.

### EXPOSE DE L'INVENTION

Selon un premier aspect, l'invention propose un dispositif d'entrainement en rotation pour un appareil culinaire mélangeur ou broyeur, le dispositif d'entrainement comprenant,
(i) un sous ensemble de mise en rotation,
(ii un organe d'entrainement en rotation d'un bras de travail des aliments et,
(iii) un organe de couplage en rotation du sous ensemble de mise en rotation avec l'organe d'entrainement pour transmettre un mouvement de rotation du sous ensemble de mise en rotation à l'organe d'entrainement.

De plus, l'organe de couplage est mobile entre une première position dans laquelle l'organe de couplage est adapté pour transmettre un mouvement selon un unique sens de rotation du sous ensemble de mise en rotation et une deuxième position dans laquelle l'organe de couplage est adapté pour transmettre un mouvement selon deux sens de rotation du sous ensemble de mise en rotation.

L'organe de couplage peut comprendre une portion de roue à rochet permettant de transmettre un mouvement selon un unique sens de rotation.

Le dispositif d'entrainement peut comprendre un premier élément d'accouplement relié en rotation au sous ensemble de mise en rotation et adapté pour être accouplé à la portion de roue à rochet de l'organe de couplage.

L'organe de couplage peut comprendre une portion de roue à crabots permettant de transmettre un mouvement selon deux sens de rotation.

Le dispositif d'entrainement peut comprendre un deuxième élément d'accouplement adapté pour être accouplé à la portion de roue à crabots de l'organe de couplage, pour être relié en rotation à l'organe d'entrainement.

Le Dispositif d'entrainement peut comprendre un engrenage à deux étages interposé entre le premier élément d'accouplement et deuxième élément d'accouplement, pour modifier un couple et une vitesse de rotation d'un mouvement transmis du premier élément d'accouplement au deuxième élément d'accouplement, lorsque le deuxième élément d'accouplement est accouplé à la portion de roue à crabots de l'organe de couplage.

L'organe de couplage peut être mobile en translation entre la première position et la deuxième position.

Le dispositif d'entrainement peut comprendre un levier permettant de déplacer en translation l'organe de couplage entre la première position et la deuxième position.

Au moins un organe élastique peut exercer un effort sur le levier pour le positionner automatiquement en première position.

Un actionneur peut être adapté pour positionner et maintenir le levier en deuxième position.

Le sous ensemble de mise en rotation peut comprendre un enrouleur comprenant une corde et un ressort de rappel, l'enrouleur entraînant en rotation le sous ensemble de mise en rotation.

Selon un autre aspect, l'invention concerne un appareil culinaire mélangeur ou broyeur comprenant un dispositif d'entrainement selon l'une quelconque des revendications précédentes.

L'appareil culinaire peut comprendre un bol et un couvercle adapté pour fermer le bol, le dispositif d'entrainement pouvant être contenu dans le couvercle.

L'appareil culinaire peut comprendre un bras de travail des aliments amovible pour mélanger ou broyer, le bras de travail des aliments étant connecté à l'organe d'entrainement du dispositif d'entrainement.

### DESCRIPTION DES FIGURES

D'autres caractéristiques, buts et avantages de l'invention ressortiront de la description qui suit, qui est purement illustrative et non limitative, et qui doit être lue en regard du dessin annexé sur lequel :
[Fig. 1] La figure 1 est une représentation éclatée en perspective d'un dispositif d'entrainement selon l'invention.
[Fig. 2] La figure 2 est une représentation éclatée de côté d'un dispositif d'entrainement selon l'invention.
[Fig. 3] La figure 3 est une représentation partielle éclatée en perspective d'un dispositif d'entrainement selon l'invention.
[Fig. 4] La figure 4 est une représentation partielle éclatée en perspective d'un dispositif d'entrainement selon l'invention.
[Fig. 5] La figure 5 est une représentation en coupe de côté d'un dispositif d'entrainement selon l'invention.
[Fig. 6] La figure 6 est une représentation en double coupe de côté d'un dispositif d'entrainement selon l'invention, lorsque l'organe de couplage est dans une première position.
[Fig. 7] La figure 7 est une représentation en double coupe de côté d'un dispositif d'entrainement selon l'invention, lorsque l'organe de couplage est dans une deuxième position.
[Fig. 8] La figure 8 est une représentation en perspective d'un couvercle d'un appareil culinaire selon l'invention.
[Fig. 9] La figure 9 est une représentation en perspective d'un appareil culinaire selon l'invention.

### DESCRIPTION DETAILLEE DE L'INVENTION

### Dispositif d'entrainement

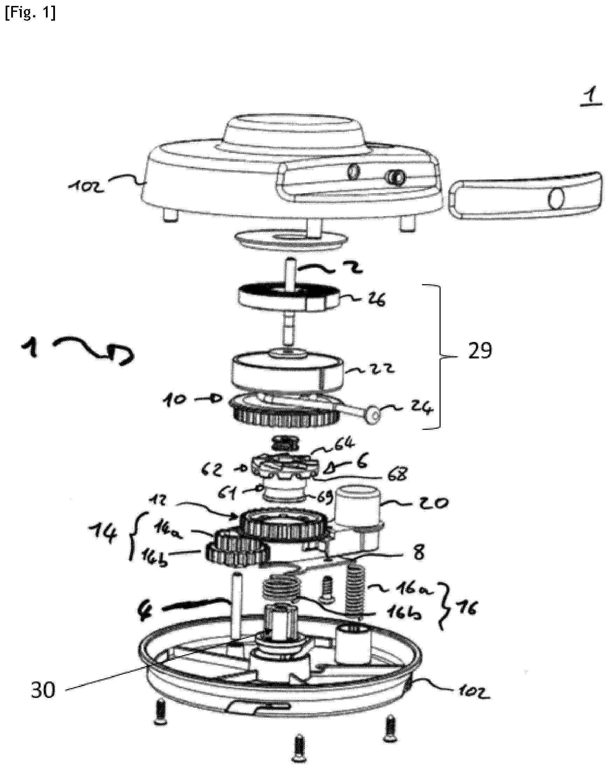

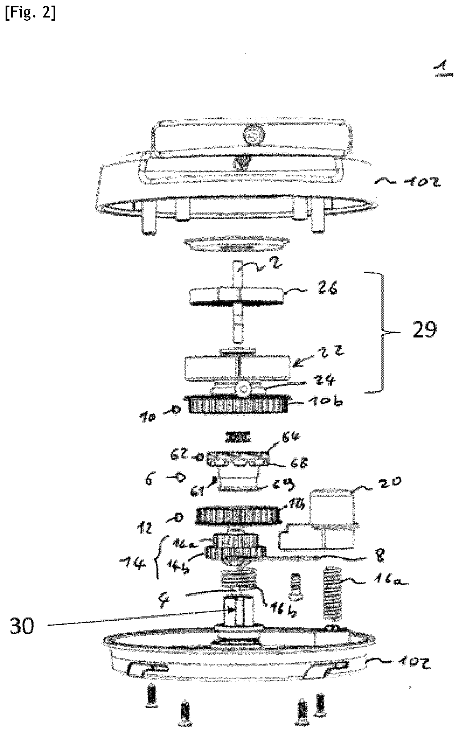

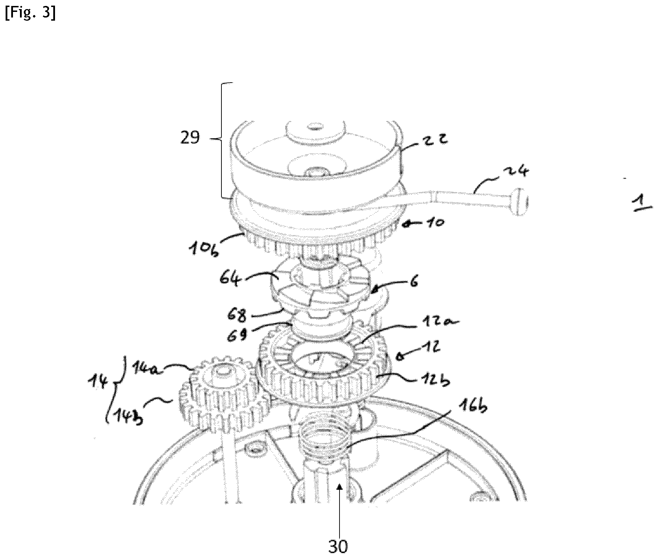

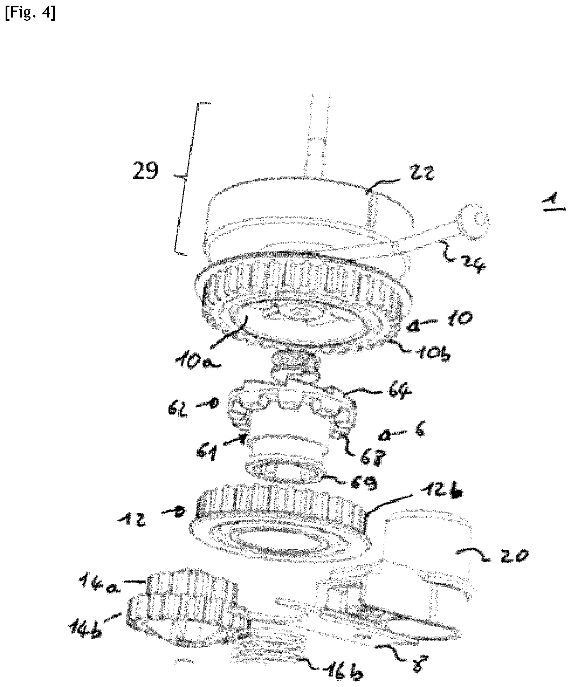

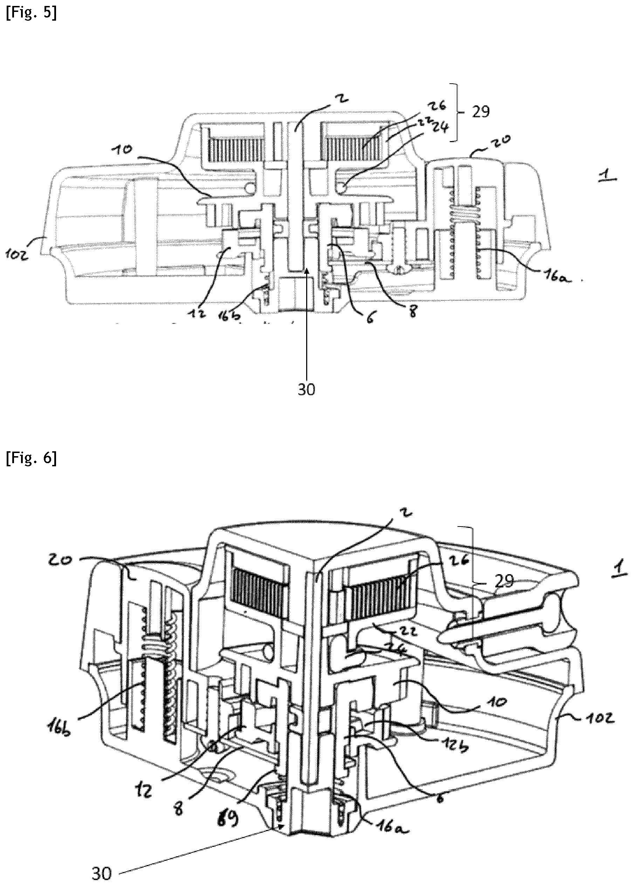

Selon un premier aspect, en référence aux figures 1 à 7, l'invention propose un dispositif d'entrainement 1 en rotation pour un appareil culinaire mélangeur ou broyeur.

Le dispositif d'entrainement 1 comprend principalement,
(i) un sous ensemble de mise en rotation 29,
(ii) un organe d'entrainement 30 en rotation d'un bras de travail des aliments.et,
(iii) un organe de couplage 6 en rotation du sous ensemble de mise en rotation 29 avec l'organe d'entrainement 30 pour transmettre un mouvement de rotation du sous ensemble de mise en rotation 29 à l'organe d'entrainement 30.

L'organe de couplage 6 est mobile entre une première position dans laquelle l'organe de couplage 6 est adapté pour transmettre un mouvement selon un unique sens de rotation du sous ensemble de mise en rotation 29 et une deuxième position dans laquelle l'organe de couplage 6 est adapté pour transmettre un mouvement selon deux sens de rotation du sous ensemble de mise en rotation 29.

Ainsi, l'organe de couplage 6 permet très avantageusement de changer de mode de transmission pour permettre une rotation unidirectionnelle ou une rotation bidirectionnelle. En d'autres termes, tel que cela sera détaillé ci-après, un simple déplacement de l'organe de couplage 6 permet de passer d'une première position de rotation unidirectionnelle à une deuxième position de rotation bidirectionnelle et vice et versa. Cette disposition permet très avantageusement au dispositif d'entrainement 1 d'être particulièrement versatile et de pouvoir être utilisé aussi bien pour hacher que pour mélanger. En effet, pour hacher de gros éléments, on préférera souvent une rotation unidirectionnelle, et pour mélanger on préférera souvent une rotation bidirectionnelle.

### Sous ensemble de mise en rotation

Le dispositif d'entrainement 1 comprend un sous ensemble de mise en rotation 29.

Typiquement, le sous ensemble de mise en rotation 29 est un enrouleur comprenant une corde 24, dont une extrémité est enroulée autour d'une roue d'entrainement 22 et dont l'autre extrémité est reliée à une poignée, et un ressort de rappel 26. Le sous ensemble de mise en rotation 29 comprend avantageusement un tambour enrouleur ou une roue d'entrainement 22 comprenant une gorge où vient se loger la corde 24 en s'enroulant autour de l'axe de rotation. La roue d'entraînement 22 est un élément connu qui entre en rotation grâce à la traction sur une corde 24. Lorsqu'un utilisateur tire sur la poignée reliée à la corde 24, celle-ci est complètement déroulée, alors le ressort de rappel 26 permet à la roue d'entraînement 22 de tourner en sens inverse et ainsi réenrouler la corde 24. Il est à noter que la rotation engendrée par le ressort de rappel 26 est inverse à la rotation engendrée par la corde 24.

La roue d'entrainement 22 du dispositif d'entrainement 1 présente une cavité destinée à recevoir le ressort de rappel 26. Avantageusement, la corde 24 est enroulée dans la gorge de la roue d'entrainement 22, dans le sens anti-horaire par rapport à l'axe de rotation et le ressort de rappel 26 est disposé dans la cavité de la roue d'entrainement 22 enroulé dans le sens horaire par rapport à l'axe de rotation. Il peut être envisagé que la corde 24 soit enroulée dans la gorge de la roue d'entrainement 22, dans le sens horaire par rapport à l'axe de rotation et le ressort de rappel soit disposé dans la cavité de la roue d'entrainement 22 enroulé dans le sens anti-horaire par rapport à l'axe de rotation.

Le sous ensemble de mise en rotation 29 est lié en rotation à un premier élément d'accouplement 10.

Selon le mode de réalisation ici présenté, le premier élément d'accouplement 10 ici présenté fait partie du sous-ensemble de mise en rotation 29 (il s'agit de la même pièce). Néanmoins le sous ensemble de mise en rotation 29 et le premier élément d'accouplement 10peuvent aussi être deux pièces distinctes fixées l'une à l'autre.

### Premier élément d'accouplement

Le dispositif d'entrainement 1 comprend un premier élément d'accouplement 10 qui permet de transmettre un mouvement de rotation du sous ensemble de mise en rotation 29 à l'organe de couplage 6 (lorsque l'organe de couplage 6 est dans une première position) ou à un deuxième élément d'accouplement 12 (lorsque l'organe de couplage 6 est dans une deuxième position d'accouplement).

Selon le mode de réalisation ici présenté, le premier élément d'accouplement 10 se présente sous la forme d'une roue avec deux faces et une tranche. Une face 10a présente une roue à rochet. La tranche 10b présente des dentures adaptées pour engrener un engrenage 14 qui sera décrit ci-après. Les dentures de la tranche 10b peuvent être des dentures droites ou hélicoïdales.

Tel que cela sera décrit ci-après, la face 10a du premier élément d'accouplement 10 est adaptée pour transmettre un mouvement de rotation pour un seul sens de rotation à la roue à rochet 64 de l'organe de couplage 6. Ainsi, dans un premier sens de rotation de la face 10a, le premier élément d'accouplement 10 entraine en rotation la roue à rochet 64. Dans un second sens de rotation de la face 10a, l'accouplement entre la roue à rochet 64 et le premier élément d'accouplement 10 n'est pas possible, et il n'y a pas de transmission de rotation.

De plus, tel que cela sera décrit ci-après, la tranche 10b permet de transmettre un mouvement de rotation bidirectionnel (i.e. quel que soit le sens de rotation) à un engrenage 14.

Le premier élément d'accouplement 10 peut être réalisé en métal (tel que de l'acier, de l'acier inoxydable, ou de l'aluminium), en matériau polymère ou en matériau composite.

### Organe de couplage

En référence aux figures 1 à 7, l'organe de couplage 6 se présente sous la forme d'une pièce de révolution ayant une section en forme de T. En d'autres termes et de manière très schématique, l'organe de couplage 6 présente une portion d'arbre 61 axiale et une roue transversale 62.

En sus, l'organe de couplage 6 est creux pour accueillir l'organe d'entrainement 30. Typiquement l'organe de couplage 6 peut présenter un alésage avec des cannelures pour avoir une liaison à cannelures avec l'organe d'entrainement 30. En effet, les cannelures sont particulièrement adaptées pour transmettre un couple de rotation.

Selon une disposition particulièrement avantageuse, l'organe de couplage 6 comprend une portion de roue à rochet 64 permettant de transmettre un mouvement selon un unique sens de rotation. D'une manière préférentielle, la roue transversale 62 comprend la portion de roue à rochet 64.

Il est rappelé qu'une roue à rochet est un dispositif anti-retour forçant un mécanisme rotatif à tourner dans un seul sens. Cette roue est munie sur tout son pourtour d'encoches provoquant dans le sens voulu le soulèvement d'un cliquet (ou d'une roue à rochet complémentaire) pour lui laisser le passage mais bloquée par lui dans l'autre sens. D'une manière connue on trouve des roues à rochet dans les mécanismes de roue libre.

La portion de roue à rochet 64 est adaptée pour coopérer avec la roue à rochet de la face 10a du premier élément d'entrainement 10, lorsque l'organe de couplage 6 est dans une première position d'accouplement.

De plus, selon une disposition particulièrement avantageuse, l'organe de couplage 6 comprend une portion de roue à crabots 68 permettant de transmettre un mouvement selon deux sens de rotation. D'une manière préférentielle, la roue transversale 62 comprend la portion de roue à crabots 68.

Il est rappelé que selon une définition communément admise, un crabot est l'accouplement direct de deux pièces métalliques par dents et rainures. En d'autres termes, un système à crabots est un système mécanique qui rend solidaires au moyen de crabots deux pièces en rotation, par solidaire il est entendu que les deux pièces sont liées en rotations de sorte à ne former qu'un seul ensemble mécanique mobile en rotation.

Tel que cela sera décrit ci-après, la portion de roue à crabot 68 est adaptée pour coopérer avec un deuxième élément d'accouplement qui sera décrit ci-après, lorsque l'organe de couplage 6 est dans une deuxième position d'accouplement.

Selon une disposition préférentielle, la portion de roue à rochet 64 et la portion de roue à crabots 68 font toutes les deux parties de la roue transversale 62. Plus précisément, selon le mode de réalisation présenté sur les figures 1 à 7, la portion de roue à rochet 64 et la portion de roue à crabots 68 constituent chacune une face de la roue transversale 62. Selon ce mode de réalisation, la portion de roue à rochet 64 et la portion de roue à crabot 68 sont axialement opposées. Tel que cela sera décrit ci-après, il s'agit là d'une disposition avantageuse permettant de passer d'un mode de rotation unidirectionnel à un mode de rotation bidirectionnel par une simple translation de l'organe de couplage 6.

En sus, l'organe de couplage 6 comprend un épaulement 69 positionné à une extrémité de la portion d'arbre 61. Tel que cela sera décrit ci-après, l'épaulement 69 est adapté pour coopérer avec un levier 8.

L'organe de couplage 6 peut être réalisé en métal (tel que de l'acier, de l'acier inoxydable, ou de l'aluminium), en matériau polymère ou en matériau composite.

### Organe d'entrainement

L'organe d'entrainement 30 est une pièce de révolution présentant une surface extérieure cannelée conçue et configurée pour être introduite dans un alésage de l'organe de couplage 6. Comme indiqué précédemment, les cannelures sont une disposition particulièrement avantageuse, permettant une transmission optimale d'un couple. Il est précisé que la liaison par cannelure rend l'organe d'entrainement 30 solidaire en rotation de l'organe de couplage 6.

En sus, l'organe d'entrainement 30 présente une empreinte prismatique adaptée pour recevoir une extrémité d'un bras de travail des aliments.

L'empreinte prismatique peut par exemple être hexagonale, cette géométrie étant particulièrement adaptée pour transmettre un couple et un mouvement de rotation.

### Deuxième élément d'accouplement

Le dispositif d'entrainement 1 comprend un deuxième élément d'accouplement 12 qui permet de transmettre une rotation du premier élément d'accouplement 10 à l'organe de couplage 6, lorsque l'organe de couplage 6 est dans une deuxième position.

Le deuxième élément d'accouplement 12 est un organe de transmission de rotation complémentaire de la roue à crabots 68. En d'autres termes, le deuxième élément d'accouplement 12 est adapté pour transmettre un mouvement de rotation pour les deux sens de rotation de la roue à crabots 68. Ainsi, lorsqu'il est accouplé à la roue à crabots 68, l'élément d'accouplement 10b transmet la rotation a l'élément d'accouplement 14, 14a étant en prise avec 10b et 14b étant en prise avec 12b, ainsi 12 est entraîné en rotation à son tour, le deuxième élément d'accouplement 12a entraine en rotation la roue à crabots 68 et transmettre ce mouvement de rotation, quel que soit le sens de rotation de la roue à crabots 68 (et donc de l'organe d'entrainement 30).

Typiquement le deuxième élément d'accouplement 12 peut présenter une portion de roue à crabots complémentaire de la roue à crabots 68.

Selon le mode de réalisation ici présenté, le deuxième élément d'accouplement 12 se présente sous la forme d'une roue avec deux faces et une tranche. Une face 12a est adaptée pour être accouplée à la roue à crabots 68. La tranche 12b présente des dentures adaptées pour engrener un engrenage 14 qui sera décrit ci-après. Les dentures de la tranche 12b peuvent être des dentures droites ou hélicoïdales.

Le deuxième élément d'accouplement 12 peut être réalisé en métal (tel que de l'acier, de l'acier inoxydable, ou de l'aluminium), en matériau polymère ou en matériau composite.

### Centrage

Le sous ensemble de mise en rotation 29, le premier élément d'accouplement 10, l'organe de couplage 6, le deuxième élément d'accouplement 12 et l'organe d'entraînement 30 sont des pièces mobiles en rotation.

Selon le mode de réalisation ici présenté, ces pièces sont mobiles en rotation autour d'un même axe de rotation et sont empilées sur un arbre primaire 2. Il est précisé que selon l'exemple ici présenté l'arbre primaire 2 est fixe et ne transmet aucun couple. Ainsi, selon le mode de réalisation ici présenté, l'arbre primaire 2 a uniquement une fonction de centrage et de guidage en rotation.

### Engrenage

Selon le mode de réalisation ici présenté, le dispositif d'entrainement 1 comprend un engrenage 14 positionnés sur un arbre secondaire 4. Tout comme l'arbre primaire 2, l'arbre secondaire 4 est fixe et rempli simplement une fonction de centrage en rotation de l'engrenage 14.

L'engrenage 14 permet de relier en rotation le premier élément d'accouplement 10 et le deuxième élément d'accouplement 12, lorsque l'organe de couplage est en deuxième position d'accouplement.

De plus, l'engrenage 14 permet de modifier un couple et une vitesse de rotation d'un mouvement transmis du premier élément d'accouplement 10 au deuxième élément 12.

Plus précisément, l'engrenage 14 est constitué de deux roues dentées 14a et 14b empilée axialement par rapport à l'arbre secondaire 4.

Une première roue dentée 14a est adaptée pour être engrenée avec le premier élément d'accouplement 10, et plus particulièrement, avec la tranche 10b du premier élément d'accouplement 10.

Une deuxième roue dentée 14b est adaptée pour être engrenée avec le deuxième élément d'accouplement 12, et plus particulièrement, avec la tranche 12b du deuxième élément d'accouplement 12.

D'une manière particulièrement avantageuse, la première roue dentée 14a et la deuxième roue dentée 14b peuvent présenter des diamètres différents. Cette disposition permet d'avoir un rapport de transmission différents entre les deux roues dentées. Ainsi, le premier élément d'accouplement 10 est engrené avec la première roue dentée 14a, la vitesse de rotation et le couple transmis par la deuxième roue dentée 14b au deuxième élément d'accouplement 12. La différence de diamètre entre la premier roue dentée 14a et la deuxième roue dentée 14b permet de modifier la vitesse de rotation et le couple transmis.

Typiquement, l'engrenage 14 est choisi pour permettre une augmentation de la vitesse de rotation, de sorte que la vitesse de rotation du deuxième élément d'accouplement 12 soit plus importante que la vitesse de rotation du premier élément d'accouplement 10.

Ainsi, en d'autres termes, l'engrenage 14 en combinaison avec le premier élément d'accouplement 10 et le deuxième élément d'accouplement 12 forme une boite de vitesse.

### Moyens de changement de position

Comme indiqué précédemment, l'organe de couplage 6 est mobile en translation entre deux positions de couplage.

Le déplacement et le maintien en position de l'organe de couplage 6 est permis par des moyens de déplacement.

Selon le mode de réalisation ici présenté, les moyens de déplacement comprennent au moins un organe élastique 16, un levier 8 et un actionneur 20.

Selon l'exemple ici présenté, les moyens de déplacement comprennent deux organes élastiques 16a et 16b.

De plus, selon l'exemple ici présenté, les organes élastiques 16a et 16b sont des ressorts à spirales. De même, l'actionneur 20 peut être un bouton poussoir.

Tel que cela est représenté sur les figures, le levier 8 est fixé à l'actionneur 20 par une vis. Ainsi, le levier 8 et l'actionneur 20 sont solidaires en translation.

Une extrémité du levier 8 présente une forme de fourche à deux dents. Cette extrémité est adaptée pour être positionnée contre l'épaulement 69 pour déplacer en translation l'organe de couplage 6, entre la première position de couplage et la deuxième position de couplage.

Plus précisément, un appui d'un utilisateur sur l'actionneur permet de déplacer en translation le levier 8 pour passer de la première position de couplage à la deuxième position de couplage.

Les deux organes élastiques 16a et 16b, sont positionnés de manière à contrer le mouvement de l'actionneur. Ainsi, les deux organes élastiques 16a et 16b maintiennent le levier 8 en première position de couplage. En d'autres termes, les organes élastiques 16a et 16b maintiennent le levier 8 en première position (i.e. il nécessaire qu'un utilisateur maintienne un appui sur l'actionneur 20 pour positionner et maintenir le levier en deuxième position. En d'autres termes encore, les organes élastiques 16a et 16b exercent un effort sur le levier 8 pour le positionner automatiquement en première position

### Appareil culinaire

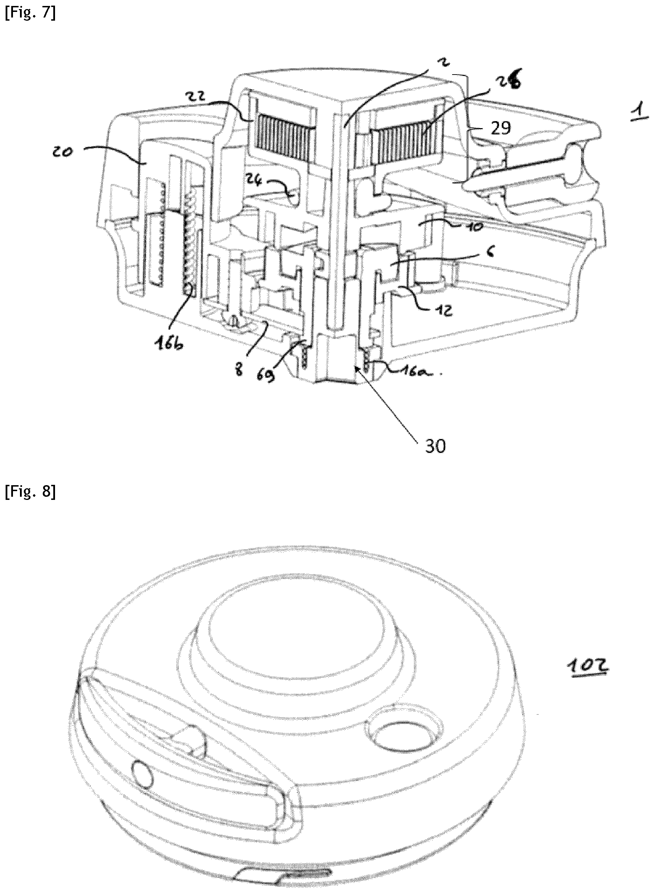

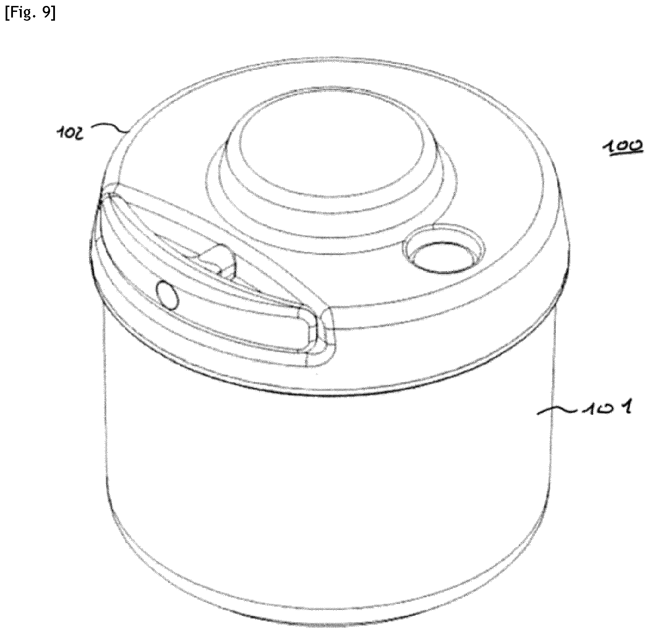

Selon un deuxième aspect, tel que représenté sur les figures 8 et 9, l'invention concerne aussi un appareil culinaire 100 mélangeur et/ou broyeur comprenant un dispositif d'entrainement 1 selon l'invention.

L'appareil culinaire 100 comprend un bol 101 et un couvercle 102 conçu et configuré pour fermer le bol 101.

Selon le mode de réalisation ici présenté, le dispositif d'entrainement 1 est contenu dans le couvercle 102.

En sus, l'appareil culinaire 100 peut comprendre d'un bras de travail des aliments pour mélanger ou broyer. Un bras de travail des aliments est positionné dans le bol 101 et connecté à l'organe d'entrainement 30 du dispositif d'entrainement 1.

### Fonctionnement

Le fonctionnement va maintenant être décrit en considérant que le dispositif d'entrainement 1 est intégré dans un appareil culinaire 100. Bien entendu le fonctionnement du dispositif d'entrainement 1 ne change pas, qu'il soit ou non intégré dans un appareil culinaire 100.

Comme indiqué précédemment, le levier 8 positionne naturellement (par défaut) l'organe de couplage 6 dans la première position de couplage. Dans cette position seule une rotation unidirectionnelle est permise.

Cette position est préférable pour découper des aliments durs, comme par exemple des noisettes. Ainsi typiquement, pour découper des aliments durs un utilisateur connectera un bras de travail muni de lames tranchantes à l'organe d'entraînement 30.

Puis l'utilisateur pourra se saisir de la poignée et tirer sur la corde 24 pour mettre en rotation le sous ensemble de mise en rotation 29.

La rotation du sous ensemble de mise en rotation 29 est directement transmise à l'organe de couplage 6 par l'intermédiaire de la face 10a en contact avec la face 64

Ainsi, dans le cas de la rotation transmise par la traction sur la corde, le premier élément d'accouplement 10 entraine en rotation l'organe de couplage 6, qui est solidaire en rotation de l'organe d'entrainement 30, et l'organe d'entrainement 30 entraine en rotation un ensemble de couteaux (ou un autre outil culinaire d'un bras de travail des aliments).

Une fois que la corde est complétement déroulée, l'utilisateur laisse le ressort de rappel la réenrouler. Le sous ensemble de mise en rotation 29 et le premier élément d'accouplement 10 tournent alors en sens inverse. Lorsque l'organe de couplage 6 est dans la première position de couplage, la roue à rochet 64 ne permet pas la transmission du mouvement de rotation du premier élément d'accouplement 10 vers l'organe de couplage 6. Cette disposition est particulièrement avantageuse dans le cas où l'utilisateur désire hacher des aliments durs car il est préférable que les lames du bras de travail tournent uniquement sous l'action du tirage de la corde 24 (force maximale) et débraye quand le ressort 26 re-enroule la corde sur 10. De plus, la plupart des bras de travails munis de lames présentent un seul côté tranchant.

A mesure que le hachage est opéré, les morceaux hachés deviennent de plus en plus petits, il peut donc devenir intéressant d'augmenter la vitesse de rotation des couteaux. De même, lorsque l'appareil culinaire est utilisé pour réaliser un mélange ou une émulsion, l'utilisateur préférera avoir une vitesse de rotation de l'outil élevée.

Pour ce faire, l'utilisateur peut enfoncer l'actionneur 20. En étant enfoncé, l'actionneur 20 déplace en translation le levier 8. Le déplacement du levier 8 positionne l'organe de coupage 6 en deuxième position de couplage. Dans cette position, la roue à crabots 68 de l'organe de couplage 6 est couplée au deuxième élément d'accouplement 12. Comme expliqué précédemment, l'accouplement avec des crabots permet d'avoir une transmission de rotation bidirectionnelle.

Dans cette configuration, la rotation du sous ensemble de mise en rotation 29 est transmise au premier élément d'accouplement 14a via les faces latérales 10b, les face latérales 14b transmettent à leur tour un mouvement de rotation à l'élément 12 via la face 12b.

L'élément 12 étant en rotation, la face 12a transmet via la face 68 un mouvement de rotation a la pièce 6.la pièce 6 via les cannelures internes transmet finalement un mouvement de rotation a la pièce 30 et donc au bras de travail.

La liaison à crabots permet que quel que soit le sens de rotation du sous ensemble de mise en rotation 29 (sens de rotation de traction de la corde ou sens de rotation inverse du réenroulèrent par le ressort de rappel), ce mouvement de rotation sera transmis à l'organe d'entrainement 30. En d'autres termes, lorsque l'organe de couplage 6 est en deuxième position de couplage, quel que soit le sens de rotation du sous ensemble de mise en rotation 29 et de l'organe de couplage 6, la rotation est transmise au deuxième élément d'accouplement 12. En outre comme indiqué précédemment, le rapport de réduction de la liaison entre la face latérale 10b, l'engrenage 14 et le deuxième élément d'accouplement 12 est choisi pour privilégier une vitesse élevée (par rapport à la vitesse de rotation obtenue lorsque l'organe de couplage est en première position de couplage).

Il est précisé que lorsque l'utilisateur relâche l'actionneur 20, les organes élastiques 16a et 16b repositionnent automatiquement l'organe de couplage 6 en première position de couplage.

Cette disposition est particulièrement avantageuse car elle évite une potentielle confusion pour l'utilisateur. Il sait que par défaut, l'organe de couplage 6 est en première position de couplage. De plus, cette disposition permet de protéger le matériel. En effet, il est préférable d'avoir par défaut une vitesse de rotation plus faible. Dans le cas contraire, le matériel pourrait être endommagé si un utilisateur démarrait le hachage d'un gros morceau de viande à vitesse élevée. Le bras de travail n'aurait pas assez de couple pour couper la viande.

## Revendications

1. Dispositif d'entrainement (1) en rotation pour un appareil culinaire (100) mélangeur ou broyeur, le dispositif d'entrainement (1) comprenant,
(i) un sous ensemble de mise en rotation (29),
(ii un organe d'entrainement (30) en rotation d'un bras de travail des aliments et,
(iii) un organe de couplage (6) en rotation du sous ensemble de mise en rotation (29) avec l'organe d'entrainement (30) pour transmettre un mouvement de rotation du sous ensemble de mise en rotation (29) à l'organe d'entrainement (30),
le dispositif étant **caractérisé en ce que** l'organe de couplage (6) est mobile entre une première position dans laquelle l'organe de couplage (6) est adapté pour transmettre un mouvement selon un unique sens de rotation du sous ensemble de mise en rotation (29) et une deuxième position dans laquelle l'organe de couplage (6) est adapté pour transmettre un mouvement selon deux sens de rotation du sous ensemble de mise en rotation (29).

2. Dispositif d'entrainement (1) selon la revendication 1, dans lequel l'organe de couplage (6) comprend une portion de roue à rochet (64) permettant de transmettre un mouvement selon un unique sens de rotation.

3. Dispositif d'entrainement (1) selon la revendication 2, comprenant un premier élément d'accouplement (10a) relié en rotation au sous ensemble de mise en rotation (29) et adapté pour être accouplé à la portion de roue à rochet (64) de l'organe de couplage (6).

4. Dispositif d'entrainement (1) selon l'une quelconque des revendications précédentes, dans lequel l'organe de couplage (6) comprend une portion de roue à crabots (68) permettant de transmettre un mouvement selon deux sens de rotation.

5. Dispositif d'entrainement (1) selon la revendication 4, comprenant un deuxième élément d'accouplement (12a) adapté pour être accouplé à la portion de roue à crabots (68) de l'organe de couplage (6), pour être relié en rotation à l'organe d'entrainement (30).

6. Dispositif d'entrainement (1) selon la revendication 5, comprenant un engrenage (14) à deux étages (14a et 14 b) interposé entre le premier élément d'accouplement (10b) et deuxième élément d'accouplement (12b), pour modifier un couple et une vitesse de rotation d'un mouvement transmis du premier élément d'accouplement (10b) au deuxième élément d'accouplement (12b), lorsque le deuxième élément d'accouplement (12a) est accouplé à la portion de roue à crabots (68) de l'organe de couplage (6).

7. Dispositif d'entrainement (1) selon l'une quelconque des revendications précédentes, dans lequel l'organe de couplage (6) est mobile en translation entre la première position et la deuxième position.

8. Dispositif d'entrainement (1) selon la revendication 7, comprenant un levier (8) permettant de déplacer en translation l'organe de couplage (6) entre la première position et la deuxième position.

9. Dispositif d'entrainement (1) selon la revendication 8 dans lequel au moins un organe élastique (16) exerce un effort sur le levier (8) pour le positionner automatiquement en première position.

10. Dispositif d'entrainement (1) selon l'une quelconque des revendications 8 ou 9, dans lequel un actionneur (20) est adapté pour positionner et maintenir le levier (8) en deuxième position.

11. Dispositif d'entrainement (1) selon l'une quelconque des revendications précédentes, dans lequel le sous ensemble de mise en rotation (29) comprend un enrouleur (10) comprenant une corde (24) et un ressort de rappel (26), l'enrouleur (10) entraînant en rotation le sous ensemble de mise en rotation (29).

12. Appareil culinaire (100) mélangeur ou broyeur comprenant un dispositif d'entrainement (1) selon l'une quelconque des revendications précédentes.

13. Appareil culinaire (100) selon la revendication 12 comprenant un bol (101) et un couvercle (102) adapté pour fermer le bol (101), le dispositif d'entrainement (1) étant contenu dans le couvercle (102).

14. Appareil culinaire (100) selon l'une quelconque des revendications 12 ou 13, comprenant un bras de travail des aliments amovible pour mélanger ou broyer, le bras de travail des aliments étant connecté à l'organe d'entrainement (30) du dispositif d'entrainement (1).

## Patentansprüche

1. Antriebsvorrichtung (1) zum Drehen für ein Küchengerät (100) zum Mischen oder Zerkleinern, wobei die Antriebsvorrichtung (1) umfasst,
(i) eine Baugruppe zum Versetzen in Drehung (29),
(ii) ein Antriebsbauteil (30) zum Drehen eines Lebensmittelverarbeitungsarms, und
(iii) ein Kopplungsbauteil (6) zum Drehen der Baugruppe zum Versetzen in Drehung (29) mit dem Antriebsbauteil (30), um eine Drehbewegung der Baugruppe zum Versetzen in Drehung (29) auf das Antriebsbauteil (30) zu übertragen,
wobei die Vorrichtung **dadurch gekennzeichnet ist, dass** das Kopplungsbauteil (6) zwischen einer ersten Position, in der das Kopplungsbauteil (6) angepasst ist, um eine Bewegung entsprechend einer einzigen Drehrichtung der Baugruppe zum Versetzen in Drehung (29) zu übertragen, und einer zweiten Position beweglich ist, in der das Kopplungsbauteil (6) angepasst ist, eine Bewegung entsprechend zwei Drehrichtungen der Baugruppe zum Versetzen in Drehung (29) zu übertragen.

2. Antriebsvorrichtung (1) nach Anspruch 1, wobei das Kopplungsbauteil (6) einen Klinkenradabschnitt (64) umfasst, das erlaubt, eine Bewegung entsprechend einer einzigen Drehrichtung zu übertragen.

3. Antriebsvorrichtung (1) nach Anspruch 2, umfassend ein erstes Kupplungselement (10a), dass mit der Baugruppe zum Versetzen in Drehung (29) drehbar verbunden und angepasst ist, um mit dem Klinkenradabschnitt (64) des Kopplungsbauteils (6) gekuppelt zu werden.

4. Antriebsvorrichtung (1) nach einem der vorstehenden Ansprüche, wobei das Kopplungsbauteil (6) einen Klauenradabschnitt (68) umfasst, der erlaubt, eine Bewegung entsprechend zwei Drehrichtungen zu übertragen.

5. Antriebsvorrichtung (1) nach Anspruch 4, umfassend ein zweites Kupplungselement (12a), dass angepasst ist, um mit dem Klauenradabschnitt (68) des Kopplungsbauteils (6) gekuppelt zu werden, um mit dem Antriebsbauteil (30) drehbar verbunden zu werden.

6. Antriebsvorrichtung (1) nach Anspruch 5, umfassend ein Getriebe (14) mit zwei Stufen (14a und 14b), das zwischen dem ersten Kupplungselement (10b) und dem zweiten Kupplungselement (12b) eingefügt ist, um ein Drehmoment und eine Drehgeschwindigkeit einer Bewegung zu modifizieren, das/die von dem ersten Kupplungselement (10b) zu dem zweiten Kupplungselement (12b) übertragen wird, wenn das zweite Kupplungselement (12a) mit dem Klauenradabschnitt (68) des Kopplungsbauteils (6) gekuppelt wird.

7. Antriebsvorrichtung (1) nach einem der vorstehenden Ansprüche, wobei das Kopplungsbauteil (6) zwischen der ersten Position und der zweiten Position translationsbeweglich ist.

8. Antriebsvorrichtung (1) nach Anspruch 7, umfassend einen Hebel (8), der erlaubt, das Kopplungsbauteil (6) zwischen der ersten Position und der zweiten Position in Translation zu verschieben.

9. Antriebsvorrichtung (1) nach Anspruch 8, wobei mindestens ein elastisches Bauteil (16) einen Kraftaufwand auf den Hebel (8) ausübt, um ihn automatisch in die erste Position zu positionieren.

10. Antriebsvorrichtung (1) nach einem der Ansprüche 8 oder 9, wobei ein Aktor (20) angepasst ist, um den Hebel (8) in die zweite Position zu positionieren und zu halten.

11. Antriebsvorrichtung (1) nach einem der vorstehenden Ansprüche, wobei die Baugruppe zum Versetzen in Drehung (29) einen Aufwickler (10) umfasst, der eine Schnur (24) und eine Rückstellfeder (26) umfasst, wobei der Aufwickler (10) die Baugruppe zum Versetzen in Drehung (29) drehend antreibt.

12. Küchengerät (100) zum Mischen oder Zerkleinern, umfassend eine Antriebsvorrichtung (1) nach einem der vorstehenden Ansprüche.

13. Küchengerät (100) nach Anspruch 12, umfassend eine Schüssel (101) und einen Deckel (102), der angepasst ist, um die Schüssel (101) zu verschließen, wobei die Antriebsvorrichtung (1) in dem Deckel (102) enthalten ist.

14. Küchengerät (100) nach einem der Ansprüche 12 oder 13, umfassend einen herausnehmbaren Lebensmittelverarbeitungsarm zum Mischen oder Zerkleinern, wobei der Lebensmittelverarbeitungsarm an das Antriebsbauteil (30) der Antriebsvorrichtung (1) angeschlossen ist.

## Claims

1. Rotary drive device (1) for a mixing or grinding cooking appliance (100), the drive device (1) comprising
(i) a rotary subassembly (29),
(ii) a rotary drive member (30) of a food processing arm, and
(iii) a rotary coupling member (6) for coupling the rotary subassembly (29) to the drive member (30) in order to transmit a rotational movement from the rotary subassembly (29) to the drive member (30),
the device being **characterised in that** the coupling member (6) is movable between a first position in which the coupling member (6) is suitable for transmitting a motion in a single direction of rotation of the rotary subassembly (29) and a second position in which the coupling member (6) is suitable for transmitting a motion in two directions of rotation of the rotary subassembly (29).

2. Drive device (1) according to claim 1, wherein the coupling member (6) comprises a ratchet wheel portion (64) for transmitting a motion in a single direction of rotation.

3. Drive device (1) according to claim 2, comprising a first coupling element (10a) rotationally connected to the rotary subassembly (29) and suitable for being coupled to the ratchet wheel portion (64) of the coupling member (6).

4. Drive device (1) according to any of the preceding claims, wherein the coupling member (6) comprises a dog clutch wheel portion (68) for transmitting a motion in two directions of rotation.

5. Drive device (1) according to claim 4, comprising a second coupling element (12a) suitable for being coupled to the dog clutch wheel portion (68) of the coupling member (6), in order to be rotationally connected to the drive member (30).

6. Drive device (1) according to claim 5, comprising gearing (14) in two stages (14a and 14b) interposed between the first coupling element (10b) and the second coupling element (12b), for modifying a torque and a rotational speed of a motion transmitted from the first coupling element (10b) to the second coupling element (12b), when the second coupling element (12a) is coupled to the dog clutch wheel portion (68) of the coupling member (6).

7. Drive device (1) according to any of the preceding claims, wherein the coupling member (6) is translatable between the first position and the second position.

8. Drive device (1) according to claim 7, comprising a lever (8) for moving the coupling member (6) in translation between the first position and the second position.

9. Drive device (1) according to claim 8, wherein at least one elastic member (16) exerts a force on the lever (8) to automatically position it in the first position.

10. Drive device (1) according to any of claims 8 or 9, wherein an actuator (20) is suitable for positioning and holding the lever (8) in the second position.

11. Drive device (1) according to any of the preceding claims, wherein the rotary subassembly (29) comprises a reel (10) comprising a cord (24) and a return spring (26), the reel (10) driving the rotary subassembly (29) in rotation.

12. Mixing or grinding cooking appliance (100) comprising a drive device (1) according to any of the preceding claims.

13. Cooking appliance (100) according to claim 12, comprising a bowl (101) and a lid (102) suitable for closing the bowl (101), the drive device (1) being contained in the lid (102).

14. Cooking appliance (100) according to any of claims 12 or 13, comprising a removable food processing arm for mixing or grinding, the food processing arm being connected to the drive member (30) of the drive device (1).
